# EUROPÄISCHE PATENTANMELDUNG

(11) **EP 4 699 781 A1**
(43) Veröffentlichungstag der Anmeldung: **25.02.2026**
(21) Anmeldenummer: 25195966.4
(22) Anmeldetag: 14.08.2025
(51) Int. Cl.: B29C 49/16, B29C 49/18, B29C 49/78, B29C 49/12, B29C 49/42, B29C 49/58, B29L 31/00, F16K 37/00, B29C 49/36

(54) **VERFAHREN UND VORRICHTUNGEN ZUM UMFORMEN VON KUNSTSTOFFVORFORMLINGEN ZU KUNSTSTOFFBEHÄLTNISSEN MIT ERMITTLUNG EINER SCHALTZEITVERZÖGERUNG VON VENTILEN**

(30) Priorität: 23.08.2024 DE 102024124195
(71) Anmelder: Krones AG, 93073 Neutraubling (DE)
(72) Erfinder: Hengl, Benedikt, 93073 Neutraubling (DE); Kulzer, Markus, 93073 Neutraubling (DE); Kirchmayer, Sebastian, 93073 Neutraubling (DE); Vogler, Daniel, 93073 Neutraubling (DE)
(74) Vertreter: Bittner, Bernhard

(57) **Zusammenfassung**

Verfahren zum Betreiben einer Umformungseinrichtung zum Umformen von Kunststoffvorformlingen zu Kunststoffbehältnissen, wobei die Umformungseinrichtung (1) einen bewegbaren Träger (20) aufweist, an welchem eine Vielzahl von Umformungsstationen (2) angeordnet ist, wobei jede dieser Umformungsstationen in einem Arbeitsbetrieb Kunststoffvorformlinge (10) durch Beaufschlagung mit einem fließförmigen und insbesondere gasförmigen Medium zu den Kunststoffbehältnissen umformt, wobei in dem Arbeitsbetrieb die Kunststoffvorformlinge zu ihrer Expansion mit wenigstens zwei unterschiedlichen Druckniveaus beaufschlagt werden und zu dieser Beaufschlagung wenigstens zwei Ventile verwendet werden, dadurch gekennzeichnet, dass wenigstens zeitweise wenigstens ein Messwert bestimmt wird, der für eine Schaltzeit und/oder einer Schaltzeitverzögerung wenigstens eines der Ventile charakteristisch ist, wobei dieser Messwert sich aus einem Druckmesswert ergibt.

## Beschreibung

Die vorliegende Erfindung bezieht sich auf eine Vorrichtung und ein Verfahren zum Umformen von Kunststoffvorformlingen zu Kunststoffbehältnissen. Derartige Verfahren und Vorrichtungen sind aus dem Stand der Technik seit langem bekannt. Dabei werden üblicherweise erwärmte Kunststoffvorformlinge zu Kunststoffbehältnissen umgeformt, indem die Kunststoffvorformlinge mit Druckluft beaufschlagt werden. Üblicherweise werden dabei im Stand der Technik mehrere Druckstufen eingesetzt, um die Kunststoffvorformlinge zu expandieren. So wird beispielsweise ein Vorblasdruck verwendet sowie ein Fertigblasdruck, der höher ist als der Vorblasdruck. Zum Steuern der Druckbeaufschlagung werden üblicherweise mehrere Ventile verwendet.

Systembedingt weisen derartige Ventile üblicherweise eine Ventilschaltverzögerung auf. Dies bedeutet, dass eine bestimmte Zeit vergeht, nachdem das Ventil geschaltet wurde, bis es tatsächlich in eine andere Ventilstellung übergeht. Aus dem Stand der Technik bekannte Maschinen berücksichtigen üblicherweise diesen Schaltzeitverlust nicht. Daher kann es beispielsweise zum Überströmen zwischen zwei Druckstufen kommen.

Jüngere aus dem Stand der Technik bekannte Maschinen berücksichtigen diese Schaltzeitverzögerung im Rahmen von Maschinenparametern. Auf diese Weise wird ein ungewolltes Überströmen verhindert und den jeweils verbauten Ventilen bzw. deren Schaltcharakteristika kann individuell Rechnung getragen werden.

Im laufenden Betrieb kann es jedoch zum Beispiel durch Verschleiß der Ventile zu Schaltzeitverzögerungen kommen bzw. die Schaltzeitverzögerungen können sich leicht verändern.

Falls daher starre Maschinenparameter hinterlegt sind, wird dieser Fehler nicht kompensiert. Es ist bekannt, dass die Maschinenparameter zumindest mit höheren Benutzerrechten veränderbar sind. Es besteht aber die Gefahr von Falscheingaben, welche insbesondere zu höheren Luftverbräuchen führen können.

Der vorliegenden Erfindung liegt daher die Aufgabe zugrunde, eine Kompensation von veränderten Ventilschaltzeitverzögerungen zu berücksichtigen. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Betreiben einer Umformungseinrichtung zum Umformen von Kunststoffvorformlingen zu Kunststoffbehältnissen weist diese Umformungseinrichtung einen bewegbaren und insbesondere drehbaren Träger auf, an welchem eine Vielzahl von Umformungsstationen angeordnet ist, wobei jede dieser Umformungsstationen in einem Arbeitsbetrieb (der Umformungseinrichtung) Kunststoffvorformlinge durch Beauschlagung (der Kunststoffvorformlinge) mit einem fließfähigen und insbesondere gasförmigen Medium zu den Kunststoffbehältnissen umformt (und insbesondere expandiert).

Dabei werden in dem Arbeitsbetrieb die Kunststoffvorformlinge zu ihrer Expansion mit wenigstens zwei unterschiedlichen Druckniveaus beaufschlagt und zu dieser Beaufschlagung werden wenigstens zwei Ventile verwendet (um die Beaufschlagung zu steuern).

Besonders bevorzugt wird wenigstens zeitweise wenigstens ein Messwert bestimmt, der für eine Schaltzeit und/oder eine Schaltzeitverzögerung wenigstens eines der Ventile charakteristisch ist, wobei dieser Messwert sich aus einem Druckmesswert ergibt und/oder wobei dieser Messwert besonders bevorzugt eine Zeitspanne zwischen einem Schaltsignal und einer aus der Ventilschaltung hervorgehenden Druckveränderung ist.

Es wird daher im Rahmen der Erfindung vorgeschlagen, die Schaltzeitverzögerung zu messen, um auf diese Weise eine Kompensation zu ermöglichen. Insbesondere wird die Schaltzeitverzögerung unter Verwendung eines Druckmesswertes (und insbesondere eines zeitlichen Druckverlaufs) bestimmt.

Damit wird insbesondere vorgeschlagen, dass ein bestimmtes Druckverhalten, etwa ein deutlicher Druckanstieg oder Druckabfall erfasst wird und insbesondere auch ein Zeitpunkt dieses Druckanstiegs oder Druckabfalls erfasst wird. Dieser Zeitpunkt wird bevorzugt in eine Beziehung gesetzt zu einem (insbesondere elektrischen) Schaltzeitpunkt des Ventils, um so die Schaltzeitverzögerung zu bestimmen.

Bei einem bevorzugten Verfahren ist der Druckmesswert ein für eine wesentliche Änderung eines von einem Drucksensor erfassten Druckes charakteristischer Druckmesswert.

Unter einer wesentlichen Änderung wird dabei eine Änderung des Druckmesswerts um wenigstens 5%, bevorzugt um wenigstens 10%, bevorzugt um wenigstens 20% und bevorzugt um wenigstens 30% und besonders bevorzugt um wenigstens 40% verstanden.

Insbesondere werden daher Änderungen berücksichtigt, welche in kurzen Zeiträumen auftreten, wobei bevorzugt unter einem kurzen Zeitraum ein Zeitraum verstanden, der geringer ist als 100ms, bevorzugt geringer als 50ms, bevorzugt geringer als 30ms, bevorzugt geringer als 20ms und besonders bevorzugt geringer als 10ms.

Bei einem weiteren bevorzugten Verfahren wird eine Schaltzeitverzögerung bestimmt, welche zwischen einem - insbesondere elektrischen - Schalten eines Ventils und dem Auftreten des Druckmesswerts aufgetreten ist wobei bevorzugt diese Schaltzeitverzögerung der Messwert ist

Damit handelt es sich bevorzugt bei dem eigentlich zu bestimmenden Messwert um die Schaltzeitverzögerung. Um diese jedoch zu bestimmen, wird vorgeschlagen, den Zeitpunkt des Effekts einer Ventilschaltung (d.h. den Zeitpunkt der Druckänderung) zu bestimmen und aus diesem Zeitpunkt wiederum auf die Schaltzeitverzögerung zu schließen.

Es geht also im Rahmen der Erfindung um den eigentlich zu bestimmenden Messwert, bei dem es sich um die Schaltzeitverzögerung handelt. Diese wird jedoch anders als im Stand der Technik üblich dadurch bestimmt, dass das Auftreten einer Druckänderung erfasst wird und diese als Maß für den Effekt des Schaltens gewertet wird.

Wie oben erwähnt, handelt es sich bei dem bewegbaren Träger bevorzugt um einen drehbaren Träger und insbesondere ein sogenanntes Blasrad.

Besonders bevorzugt werden die unterschiedlichen Druckniveaus aus Reservoirs zur Verfügung gestellt. Besonders bevorzugt handelt es sich bei diesen Reservoirs um Ringsspeicher oder Ringleitungen. Bevorzugt werden diese Reservoirs von einem Drehverteiler mit dem fließfähigen Medium und insbesondere mit Druckluft versorgt. Bevorzugt bewahren daher diese Reservoirs Druckluft unter unterschiedlichen Drücken auf. Besonders bevorzugt sind diese Reservoirs stationär an dem bewegbaren und insbesondere drehbaren Träger angeordnet. Bevorzugt sind wenigstens zwei derartige Reservoirs, bevorzugt wenigsten drei derartige Reservoirs und besonders bevorzugt wenigstens vier derartige Reservoirs.

Besonders bevorzugt wird wenigstens zeitweise während des Arbeitsbetrieb Druckluft aus dem zu expandierenden Behältnis zurück in wenigstens einen Druckspeicher oder in wenigstens ein Reservoir geleitet und daher bevorzugt recycelt. Besonders bevorzugt wird auch zu diesem Zurückleiten bzw. Recyceln wenigstens ein Ventil verwendet. Bevorzugt erfolgt während des Arbeitsbetriebs (insbesondere zeitversetzt) ein Rückführen und/oder Recyclen in mehrere Reservoirs.

Bei einem weiteren bevorzugten Verfahren werden die Behältnisse in dem Arbeitsbetrieb während ihrer Expansion in ihrer Längsrichtung gedehnt, was insbesondere mittels einer sogenannten Reckstange erfolgt, welche in die Kunststoffvorformlinge eingeführt wird, um diese in der Längsrichtung zu dehnen. Besonders bevorzugt wird diese Bewegung auch unter Berücksichtigung der einzelnen Druckniveaus gesteuert mit denen die Behältnisse beaufschlagt werden.

Bei einem weiteren bevorzugten Verfahren wird der besagte Messwert automatisch bestimmt. Dabei kann beispielsweise ein Kalibrierbetrieb vorgesehen sein, während dessen die einzelnen Druckmesswerte aufgenommen werden, um so die Ventilschaltzeitverzögerungen zu bestimmen. Diese gemessenen Druckmesswerte (und bevorzugt auch deren zeitliche Verläufe) werden bevorzugt in einer Speichereinrichtung abgespeichert.

Besonders bevorzugt werden diese Druckmesswerte über eine vorgegebene Zeitspanne bestimmt. Auf diese Weise kann insbesondere ein zeitliches Verhalten der Druckmesswerte aufgenommen werden.

Besonders bevorzugt wird der Druck über eine bestimmte Zeitspanne hinweg gemessen, in der sich eine Druckveränderung feststellen lässt. Diese Druckveränderung wird bevorzugt als Indiz für ein tatsächlich erfolgtes Schalten eines Ventils verwendet.

Bei einem bevorzugten Verfahren wird in die Vorrichtung bzw. die Umformungseinrichtung eine Prüfroutine implementiert, welche bevorzugt in regelmäßigen Abständen die Ventilschaltzeitverzögerung prüft und bewertet und gegebenenfalls im Falle einer Abweichung nachkorrigiert.

Besonders bevorzugt sind daher die in der Maschinensteuerung hinterlegten Parameter für die Schaltzeitverzögerung variabel und können insbesondere von einer Maschinensteuerung selbst geändert werden. Bevorzugt handelt es sich damit bei den Schaltzeitverzögerungen um variable Maschinenparameter, die nicht bzw. nicht mehr von einem Bediener geändert bzw. gepflegt werden müssen.

Bei einem bevorzugten Verfahren kann beispielsweise in einem von einem Benutzer vorgegebenen Zeitraum, beispielsweise einmal pro Woche, eine derartige Feststellung und/oder Messung der Ventilschaltzeitpunkte vorgenommen werden. Bevorzugt, kann dieser Zeitraum in einem Maschinenparameter festgelegt und/oder geändert werden. Die Maschine bzw. Vorrichtung fordert bevorzugt den Bediener zur Durchführung eines Kalibriervorgangs auf, wobei jedoch hier auch ein Automatismus denkbar wäre.

Der Maschinenbediener startet dann, bevorzugt mittels eines Befehls, die Prüfroutine. Bei einem bevorzugten Verfahren wird der Maschine bzw. Umformungseinrichtung eine gezielte Anzahl von Kunststoffvorformlingen, welche insbesondere der Anzahl der Umformungsstationen entspricht zugeführt und diese werden dann, (insbesondere ohne Erwärmung) bis in die Umformungsstationen transportiert. Dies kann beispielsweise mit einer Umformungsstation Nr. 1 beginnen.

Die Umformungsstation schaltet dann, insbesondere während die Maschine die Kunststoffvorformlinge transportiert bzw. sich der Transportträger bzw. das Blasrad dreht, bei einen bestimmten Drehwinkel der Reihe nach die einzelnen Ventile bzw. Prozessventile ein und anschließend wieder aus. Bevorzugt werden dabei die Zeitpunkte dieses Schaltens der Ventile erfasst.

Die Maschine vergleicht sodann bevorzugt den Zeitpunkt des Signalwechsels mit dem Zeitpunkt der Druckveränderung an dem jeweiligen Drucksensor eines Blaskolbenblocks bzw. Ventilblocks.

Eine kleine Besonderheit kann bei dem Exhaustventil, d. h. dem Auslassventil bestehen. Hier kann beispielsweise zunächst Druck mithilfe eines zweiten Ventils eingeschlossen werden, um später dessen Entlastungszeitpunkt zu detektieren. Die weiteren Ventile können bevorzugt auch bei einem offenen Auslassventil kalibriert werden.

Denkbar ist das Verfahren auch ohne Kunststoffvorformlinge aber die Druckveränderungen zeigen sich unter Umständen ungenauer. Bei der Verwendung der Kunststoffvorformlinge dient das in den Kunststoffvorformlingen befindliche (jedoch bevorzugte konstante) Volumen, um eine höhere Genauigkeit zu erzielen.

Bei einem weiteren bevorzugten Verfahren wird dieser Messwert oder ein aus diesem Messwert abgeleiteter Wert in dem Arbeitsbetrieb der Maschine berücksichtigt. Bei dem aus diesem Messwert abgeleiteten Wert kann es sich insbesondere um einen Zeitpunkt oder einen Zeitraum handeln, in welchem eine Druckänderung erfasst wurde.

Insbesondere kann aus dem Messwert eine Ventilschaltzeitverzögerung gemessen oder berücksichtigt werden, und diese wiederum im Arbeitsbetrieb berücksichtigt werden. Besonders bevorzugt wird der gemessene Wert und/oder auch ein aus diesem gemessenen Wert abgeleiteter oder ermittelter Wert in einer Maschinensteuerung der Vorrichtung hinterlegt.

Bevorzugt wird der Messwert außerhalb des Arbeitsbetriebs und/oder während eines Kalibrierbetriebs der Vorrichtung und/oder der Umformungsstation gemessen. In diesem Kalibrierbetrieb ist es möglich, dass der bewegbare Träger langsamer bewegt wird als in einem Arbeitsbetrieb. Bevorzugt wird der Träger mit höchstens 50% der Drehgeschwindigkeit im Arbeitsbetrieb gedreht, bevorzugt höchstens mit 40%, bevorzugt höchstens mit 30% und besonders bevorzugt höchstens mit 20% und besonders bevorzugt höchstens mit 10%.

Weiterhin werden bevorzugt in diesem Kalibrierbetrieb mehrere und bevorzugt alle Ventile, - insbesondere nacheinander - geschalten, um auf diese Weise über den Druckverlauf Zeitverzögerungen zu bestimmen. Bevorzugt werden diese Ventile sowohl von einem ersten (z.B. geschlossenen) Zustand in einen zweiten (z.B. offenen) Zustand geschalten als auch von dem zweiten Zustand in den ersten Zustand.

Bei einem weiteren bevorzugten Verfahren wird der Messwert für mehrere Umformungsstationen und bevorzugt für alle Umformungsstationen bestimmt. Es wäre doch auch möglich, den Messwert nur für eine oder wenige Umformungsstationen zu bestimmen und davon auszugehen, dass der Messwert bei den anderen Umformungsstationen ähnlich sein wird.

Bei einem weiteren bevorzugten Verfahren wird der Messwert für mehrere Ventile und bevorzugt für alle Ventile einer Umformungsstation bestimmt. Auf diese Weise können je nach der Funktion des Ventils (z.B. Schaltventil für die Hochdruckversorgung oder Auslassventil) unterschiedliche Messwerte bestimmt werden.

Es wäre auch beispielsweise möglich, dass eine Bestimmung der Messwerte an einer Umformungsstationen dort jedoch an allen Ventilen erfolgt und anschließend eine Übertragung auf andere Umformungsstationen erfolgt. Es kann jedoch wie erwähnt auch an allen Stationen gemessen werden und bevorzugt ein Mittelwert zugrunde gelegt werden.

Im Folgenden werden Optionen dargestellt, wie die gemessenen Schaltzeitverzögerungen als neue Maschinenparameter definiert werden.

So ist es möglich, an einer Umformungsstation-für die einzelnen Ventile Messwerte zu bestimmen und diese Information an alle Stationen zu übertragen, und bevorzugt auch an alle gleichartigen Ventile. Der Vorteil dieser Vorgehensweise ist, dass sie sehr schnell abläuft. Nachteilig ist jedoch eine bestimmte Ungenauigkeit, da im Prinzip für alle Umformungsstationen ein gleiches Verhalten zugrunde gelegt wird.

Bei einer weiteren bevorzugten Ausführungsform erfolgt eine Ermittlung des Messwertes an allen Umformungsstationen und an allen Ventilen. Diese Messwerte werden bevorzugt individuell an alle Umformungsstationen übertragen (d.h. insbesondere die Messwerte, welche für eine bestimmte Umformungsstation gemessen wurden, werden auch an die weiteren Umformungsstation übertragen) und bevorzugt für deren Steuerung verwendet.

Dabei werden bevorzugt die Schaltzeiten pro Ventil über alle Stationen gemittelt. Dieses Verfahren ist genauer, da nicht ein Mittelwert bestimmt wird, sondern ein Median. Bevorzugt erfolgt eine Anpassung an allen Stationen.

Es wäre jedoch auch möglich, dass alle Umformungsstationen unter Zugrundelegung dieses Medians und/oder des gleichen Medians gesteuert werden. Diese Stationen werden insbesondere gleichermaßen angepasst.

Bevorzugt wird ein Fehler ausgegeben, wenn einzelne Umformungsstationen bzw. deren Ventile zu stark von dem Mittelwert oder Median abweichen. Diese Vorgehensweise stellt einen guten Kompromiss dar und führt zu einer ausreichenden Präzision und/oder Genauigkeit der Messung.

Bei einem weiteren bevorzugten Verfahren erfolgt eine Ermittlung der Messwerte an allen Umformungsstationen und allen Ventilen. Hierbei wird für jede Station und jedes Ventil gemessen und es werden die Verzögerungszeiten angepasst. Der Vorteil dieser Vorgehensweise ist die maximal mögliche Genauigkeit, welche insbesondere auch einem Monitoring am nächsten kommt. Ein Nachteil besteht in einer sehr großen Datenmenge.

Bei einem weiteren bevorzugten Verfahren ist es möglich, aus den Messwerten auf ein Verschleißverhalten der einzelnen Ventile zu schließen. So kann beispielsweise aus einer Veränderung des Messwertes darauf geschlossen werden, dass das betreffende Ventil in einem bestimmten Verschleißstadium ist oder nach einer zu schätzenden Zeit oder Betriebsdauer verschleißen wird.

Genauer gesagt kann ein Verschleißverhalten vorhergesagt werden. Zu diesem Zweck kann auch eine künstliche Intelligenz (KI) verwendet werden, wobei insbesondere auf Daten einer Vielzahl von Maschinen, welche dieselben Ventile verwenden, zurückgegriffen wird.

Daneben ist es möglich, zu prüfen, ob einzelne Ventile bzw. deren Schaltzeiten stärker abweichen oder die Streuung innerhalb der Umformungsstationen plötzlich außergewöhnlich groß wird.

Bevorzugt ist es auch möglich, ein Prüfprotokoll über die einzelnen Messwerte zu erstellen.

Durch die Erfindung und insbesondere Automatisierung ist es möglich, Falscheingaben oder Fehleingaben der Ventilschaltverzögerung zu vermeiden. Es ist kein Hintergrundwissen der Benutzer erforderlich. Daneben sind auch keine Tabellen oder Gleichungen erforderlich, welche den aktuellen Stand pflegen, denn diese werden bevorzugt automatisch angelegt.

Durch die Erfindung ist ein fortlaufendes Nachschärfen der Ventilschaltzeiten für eine höchste Schaltgenauigkeit und für den Ausschluss von jeglichem Überströmen zwischen den Blasstufen möglich. In einer Inbetriebnahme würde man sofort defekte Ventile erkennen, weil die Prüfroutine besonders bevorzugt in einem ersten Durchlauf jedes Ventil automatisch prüft und entsprechend bei Überschreiten eines Grenzwerts eine Störung melden kann. Auf diese Weise wird eine Zeitersparnis bei einer Fehlersuche erreicht.

Falls eine Messung pro Station und Ventil erfolgt, wäre sogar ein Mischbetrieb unterschiedlicher Ventile denkbar wenn das richtige Ersatzventil beispielsweise nicht verfügbar wäre.

Es wird also darauf hingewiesen dass es für die Erfindung nicht relevant ist, welcher Ventiltyp verbaut wird, wenn die Schaltzeit im Gegenzug individuell ermittelt und dementsprechend berücksichtigt wird. Daher kann man also beispielsweise ein Pilotventil ohne PWM auch in ein Ventil einbauen, das ursprünglich ein Pilotventil mit PWM besaß. Die reale Schaltzeit wird durch den Kalibriervorgang einfach angepasst.

Auf diese Weise sind auch Blasprozesse vergleichbar und 1 : 1 übertragbar, weil die Ventilkinematik nicht mehr relevant ist.

Bei einem weiteren bevorzugten Verfahren wird zur Bestimmung des Messwertes einer Umformungsstation bevorzugt mehreren Umformungsstationen bevorzugt allen Umformungsstationen ein nicht erwärmter Kunststoffverformung zugeführt.

Ein nicht erwärmter Kunststoffverformung wird sich bei der Druckbeaufschlagung nicht ausdehnen und sein Innenvolumen gleich halten. Auf diese Weise ist auch eine exakte Bestimmung des Druckverlaufs möglich, denn diese wird nicht durch eine Expansion des Kunststoffvorformlings beeinträchtigt.

Bevorzugt wird dieser kalte Kunststoffvorformling mit dem Druck beaufschlagt und es wird bevorzugt sowohl der Schaltzeitpunkt als eine Schaltzeitverzögerung und/oder die Reaktion eines Drucksensors bestimmt.

Bei einem weiteren bevorzugten Verfahren wird ein Zeitpunkt eines Signalwechsels an dem oder den Ventilen bestimmt d.h. der Zeitpunkt, an dem die Änderung einer Schaltstellung dieses Ventils ausgelöst wird, beispielsweise durch ein elektrisches Signal ausgelöst wird

Besonders bevorzugt wird ein Zeitpunkt oder Zeitraum bestimmt, an dem ein bestimmter Druckanstieg oder eine Druckänderung auftritt. Daneben wird bevorzugt auch der tatsächliche Ventilschaltzeitpunkt bestimmt. Aus diesen beiden Zeitpunkten oder Zeiten können dann bevorzugt Ventilschaltzeitverzögerungen bestimmt werden.

Besonders bevorzugt wird der nicht erwärmte Kunststoffvorformling mit dem Druck beaufschlagt und bevorzugt wird sowohl der Schaltzeitpunkt bestimmt, als auch die Reaktion des Drucksensors und insbesondere ein durch den Drucksensor bestimmter Druckanstieg oder eine Druckänderung.

Bei einem weiteren bevorzugten Verfahren wird der Zeitpunkt eines Signalwechsels eines Ventils bestimmt und/oder der Zeitpunkt einer Druckänderung und bevorzugt werden diese Zeitpunkte miteinander verglichen, insbesondere um so die Schaltzeitverzögerungen des jeweiligen Ventils zu bestimmen. Besonders bevorzugt wird dieser Vorgang für mehrere Ventile einer Umformungsstationen wiederholt und bevorzugt für alle Ventile.

Bei einem weiteren bevorzugten Verfahren wird der Zeitpunkt eines Signalwechsels eines Ventils und/oder der Zeitpunkt einer Druckänderung sowohl für einen Einschaltvorgang des Ventils (insbesondere den Zeitpunkt eines Übergangs von einer geschlossenen Stellung in eine geöffnete Stellung des Ventils) als auch für einen Ausschaltvorgang des Ventils (insbesondere den Zeitpunkt eines Übergangs von einer offenen Stellung in eine geschlossene Stellung des Ventils) bestimmt.

Bevorzugt werden diese Zeitpunkte miteinander verglichen, insbesondere um aus diesen Vergleichen eine Schaltzeitverzögerung sowohl für den Einschaltvorgang des Ventils als auch für den Ausschaltvorgang des Ventils zu bestimmen.

Es wäre auch möglich, eine Kompromisslösung zu wählen, d. h. in kürzeren Zeiträumen für wenige Ventile oder wenige Stationen die Schaltzeitverzögerungen zu bestimmen und in großen Wartungszeiten diese Ermittlung für alle Ventile durchzuführen. Auf diese Weise kann ein Kompromiss erreicht werden zwischen einer kurzen Zeit für den Kalibiervorgang und einer geringen Genauigkeit und einer seltener wiederholten intensiven Untersuchung jedes einzelnen Ventils.

Bei einem weiteren bevorzugten Verfahren wird in dem Arbeitsbetrieb der Kunststoffvorformling mit wenigstens drei und bevorzugt mit wenigstens vier unterschiedlichen Druckniveaus beaufschlagt. Zu dieser Beauftragung werden wenigstens drei und bevorzugt wenigstens vier Ventile verwendet.

Besonders bevorzugt werden mit dem oben genannten Verfahren die Ventilschaltverzögerungen für alle diese Ventile bestimmt.

Bei einen weiteren bevorzugten Verfahren wird in dem Arbeitsbetrieb wenigstens zeitweise das fließfähige Medium aus den expandierten Behältnissen mittels eines Auslassventils entlassen und bevorzugt wird auch für dieses Auslassventil wenigstens ein Messwerte bestimmt, der für eine Schaltzeit und/oder eine Schaltzeitverzögerung dieses Auslassventils charakteristisch ist, wobei dieser Messwert bevorzugt ein Druckmesswert ist.

Zur Bestimmung der Schaltzeitverzögerung dieses Auslassventils wird bevorzugt ein ebenfalls nicht erwärmter Kunststoffvorformling mit Druckluft beaufschlagt und diese Druckluft wird über das Auslassventil entlassen. Auch in diesem Fall kann wiederum eine Druckänderung bestimmt werden.

Bei einem weiteren bevorzugten Verfahren wird aus dem für die Schaltzeitverzögerung charakteristischen Wert und/oder wenigstens einen der aufgenommenen Messwerte auf ein Verschleißverhalten wenigstens eines Ventils und bevorzugt ein Verschleißverhalten mehrerer Ventile geschlossen.

Hierzu werden bevorzugt die Messwerte öfter gemessen und es wird bevorzugt ein Trend bestimmt.

Bei einem weiteren bevorzugten Verfahren wird, insbesondere anhand einer Druckmessung eine Ventilschaltzeit und/oder eine Ventilschaltzeitverzögerung für ein Schalten des Ventils von einer geschlossenen Stellung in eine geöffnete Stellung gemessen.

Bei einem weiteren bevorzugten Verfahren wird, insbesondere anhand einer Druckmessung eine Ventilschaltzeit und/oder eine Ventilschaltzeitverzögerung für ein Schalten des Ventils von einer geöffneten Stellung in eine geschlossene Stellung gemessen.

Bevorzugt wird sowohl insbesondere anhand einer Druckmessung eine Ventilschaltzeit und/oder eine Ventilschaltzeitverzögerung für ein Schalten des Ventils von einer geschlossenen Stellung in eine geöffnete Stellung gemessen und insbesondere anhand einer Druckmessung eine Ventilschaltzeit und/oder eine Ventilschaltzeitverzögerung für ein Schalten des Ventils von einer geöffneten Stellung in eine geschlossene Stellung gemessen.

Die Ventilschaltzeitverzögerungen können sich unterscheiden, je nachdem von welchem Zustand das Ventil in welchen Zustand geschaltet wird.

Die vorliegende Erfindung ist weiterhin eine auf eine Umformungseinrichtung zum Umformen von Kunststoffvorformlingen zu Kunststoffbehältnissen gerichtet, wobei die Umformungseinrichtung einen bewegbaren und insbesondere drehbaren Träger aufweist, an welchem eine Vielzahl von Umformungsstationen angeordnet ist und wobei jede dieser Umformungsstationen dazu geeignet und bestimmt ist, Kunststoffvorformlinge durch Beaufschlagung mit einem fließfähigen und insbesondere gasförmigen Medium zu den Kunststoffbehältnissen umzuformen, wobei in einem Arbeitsbetrieb jede Umformungsstationen dazu geeignet und bestimmt ist die Kunststoffvorformlinge zu ihrer Expansion mit wenigstens zwei unterschiedlichen Druckniveaus zu beaufschlagen und zu dieser Beaufschlagung jede Umformungsstationen wenigstens zwei Ventile aufweist.

Erfindungsgemäß ist wenigstens eine Prozessoreinrichtung vorgesehen, welche dazu geeignet und bestimmt ist wenigstens zeitweise wenigstens einen Messwert zu bestimmen, der für eine Schaltzeit und/oder eine Schaltzeitverzögerung wenigstens eines Ventils charakteristisch ist, wobei sich dieser Messwert aus einem Druckmesswert ergibt, der von einer Druckmesseinrichtung bestimmbar ist.

Bevorzugt ist wenigstens eine Messeinrichtung vorgesehen, welche dazu geeignet und bestimmt ist, wenigstens zeitweise wenigstens einen Messwert zu bestimmen, der für eine Schaltzeit und oder eine Schallzeitverzögerung wenigstens eines Ventils charakteristisch ist, wobei diese Messeinrichtung bevorzugt eine Druckmesseinrichtung ist oder aufweist.

Es wird daher auch vorrichtungsseitig vorgeschlagen, dass insbesondere in einem Kalibrierbetrieb eine wenigstens indirekte Messung einer Schaltzeit oder einer Schaltzeitverzögerungen durchgeführt wird. Bevorzugt erfolgt diese Messung über eine Druckmessung, wobei durch die Druckmessung ermittelt wird, zu welchem Zeitpunkt ein Ventil tatsächlich schaltet oder geschaltet hat.

Bei einer weiteren bevorzugten Ausführungsform ist der Druckmesswert ein für eine wesentliche Änderung eines von der Druckmesseinrichtung erfassten Druckes charakteristischer Druckmesswert. Es wird daher bevorzugt auch vorrichtungsseitig vorgeschlagen, dass nach einer wesentlichen Druckänderung gesucht wird und diese als Indiz für einen Schaltvorgang eines Ventils verwendet wird.

Bei einer weiteren bevorzugten Ausführungsform ist eine Schaltzeitverzögerung bestimmbar, welche zwischen einem - insbesondere elektrischen - Schalten des Ventils und dem Auftreten und/oder Feststellen des Druckmesswerts aufgetreten ist wobei bevorzugt diese Schaltzeitverzögerung der Messwert ist.

Bevorzugt weist die Vorrichtung eine Vergleichseinrichtung auf, welche den gemessenen Druckmesswert und/oder dessen Verlauf und/oder Druckänderungen mit einem Schaltzeitpunkt vergleicht, zu welchem das Ventil tatsächlich geschalten wurde (beispielsweise ein entsprechender Steuerbefehl an das Ventil ausgegeben wurde).

Bevorzugt handelt es sich bei dem Ventil um eine elektrisch geschaltetes und/oder betriebenes Ventil. Es kann jedoch auch ein magnetisch oder pneumatisch geschaltetes oder betriebenes Ventil verwendet werden.

Bei einer bevorzugten Ausführungsform ist jeder Umformungsstationen wenigstens eine Messeinrichtung in Form einer Druckmesseinrichtung zugeordnet. Besonders bevorzugt ist. wenigstens einer Umformungsstationen und bevorzugt sind mehreren Umformungsstationen mehrere Druckmesseinrichtungen zugeordnet.

Es wäre doch auch möglich, dass mittels einer Druckmesseinrichtung die Druckänderungen ein Schalten aller Ventile (derselben Umformungsstation) verwendet werden. So kann beispielsweise in einer Abfolge der Ventilschaltzeitpunkt für sämtliche Ventile ermittelt werden.

Bei einer bevorzugten Ausführungsform weist die Vorrichtung wenigstens eine Steuerungseinrichtung auf, welche dazu geeignet und bestimmt ist, die Vorrichtung unter Zugrundelegung wenigstens eines Messwertes oder eines aus diesem Messwertes abgeleiteten Wertes zu steuern.

Besonders bevorzugt weist die Vorrichtung eine Speichereinrichtung auf, in der die Messwerte und/oder aus diesen Messwerten abgeleitete Werte, wie etwa eine Ventilschaltzeitverzögerung speicherbar sind. Besonders bevorzugt ist der Wert für diese Ventilschaltzeitverzögerungen automatisiert änderbar.

Bei einer weiteren bevorzugten Ausführungsform weist die Vorrichtung eine Zeitmesseinrichtung auf, welche dazu geeignet und bestimmt ist, einen zeitlichen Abstand zwischen einem Schaltzeitpunkt eines Ventils und einer durch die Messeinrichtung erfassten Druckveränderung zu bestimmen. Besonders bevorzugt handelt es sich bei dieser Zeitdifferenz um denjenigen Wert, der bei der Steuerung der Maschine zu berücksichtigen ist.

Weitere Vorteile und Ausführungsformen ergeben sich aus den beigefügten Zeichnungen: Darin zeigen:
- Fig. 1: eine Darstellung einer erfindungsgemäßen Umformungseinrichtung;
- Fig. 2: eine Darstellung zur Ermittlung der Ventilschaltzeitverzögerungen.

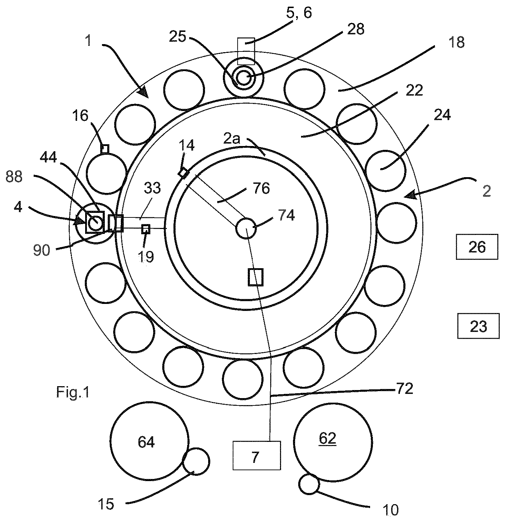

Fig. 1 zeigt eine Vorrichtung 1 zum Umformen von Kunststoffvorformlingen 10 zu Kunststoffbehältnissen 15. Diese Vorrichtung weist eine Transporteinrichtung 2 zum Transportieren der Kunststoffvorformlinge mit einen drehbaren Träger 22 auf, an dem eine Vielzahl von Umformungsstationen 24 angeordnet ist. Diese einzelnen Umformungsstationen weisen jeweils Blasformeinrichtungen 25 auf, die in ihrem Inneren einen Hohlraum zum Expandieren der Kunststoffvorformlinge ausbilden.

Das Bezugszeichen 28 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge 10 anlegbar ist, um diese so zu expandieren. Daneben wäre es auch denkbar, dass die Blasdüse an der Blasformeinrichtung abdichtet. Bevorzugt ist diese Beaufschlagungseinrichtung 28 in einer Längsrichtung und bevorzugt ausschließlich in einer Längsrichtung der Kunststoffvorformlinge bewegbar.

Das Bezugszeichen 90 kennzeichnet eine Ventilanordnung wie einen Ventilblock, der bevorzugt eine Vielzahl von Ventileinrichtungen aufweist, welche die Beaufschlagung der Kunststoffvorformlinge mit unterschiedlichen Druckniveaus steuern. Bevorzugt weist jede Umformungsstation einen derartigen Ventilblock auf.

Bevorzugt ist auch an jeder dieser Ventilanordnungen eine Drosseleinrichtung angeordnet, welche den Strömungsquerschnitt der den Kunststoffvorformlingen unter wenigstens einem Druck zugeführten Druckluft steuert. Bevorzugt sind wenigstens einige dieser Ventileinrichtungen und bevorzugt alle dieser Ventileinrichtungen sterilisierbar.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi1. Besonders bevorzugt werden die Kunststoffvorformlinge mit einem weiteren Zwischenblasdruck Pi2 beaufschlagt, der größer ist als der Druck Pi1 jedoch kleiner als der Druck P2.

Daneben kann bevorzugt noch ein weiteres Druckniveau (bzw. ein weiteres Ventil) P3 eingesetzt werden. Hier wird bevorzugt Spülluft bzw. Kühlluft für Hotfill eingesetzt. Ein für diesen Einsatz dienendes Prozessventil P3 ist -bevorzugt ebenso wie die Ventile im Blaskolbenblock - an jeder einzelnen Umformungsstation vorhanden und dessen Schaltzeit kann daher auch auf die gleiche Art und Weise ermittelt und/oder berücksichtigt werden. Auch ein Monitoring ist denkbar.

Die Spülluft bzw. Kühlluft wird dabei bevorzugt durch eine hohle Reckstange und besonders bevorzugt nach dem Fertigblasen P2 von innen an den Boden des Behälters geblasen, um diesen zu kühlen.

Nach der Expansion der Kunststoffbehältnisse werden bevorzugt die Drücke bzw. die Druckluft wieder von dem Behältnis in die einzelnen Druckreservoirs zurückgeführt.

Bevorzugt weist die Vorrichtung daher eine Luftrecyceleinrichtung auf, welche dazu geeignet und bestimmt ist, Druckluft von den einzelnen Umformungsstationen in Druckluftreservoirs, insbesondere solche Druckluftreservoirs, welche ein geringeres Druckniveau aufnehmen, zurückzuführen.

Das Bezugszeichen 88 kennzeichnet eine Reckstange (oben auch als stangenartiger Körper bezeichnet), die dazu dient, die Kunststoffvorformlinge in ihrer Längsrichtung zu dehnen. Bevorzugt weisen sämtliche Umformungsstationen derartige Blasformen 25 sowie Reckstangen 88 auf. Diese Reckstange ist bevorzugt Bestandteil einer mit 4 bezeichneten Reckeinheit. Die Reckstange 88 ist (bevorzugt ebenfalls ausschließlich) in der Längsrichtung der Kunststoffvorformlinge 10 beweglich (wobei hier die Drehung des Trägers 22 außer Acht gelassen wird).

Das Bezugszeichen 44 kennzeichnet schematisch eine Antriebseinrichtung, welche dazu geeignet und bestimmt ist, den stangenartigen Körper anzutreiben bzw. zu bewegen. Bevorzugt handelt es sich bei dieser Antriebseinrichtung um einen Elektromotor. Bevorzugt ist jeder Umformungsstation eine solche Antriebseinrichtung zugeordnet.

Bevorzugt weist die Vorrichtung eine Steuerungseinrichtung auf, welche diese Antriebseinrichtung steuert und insbesondere unter Berücksichtigung der Druckbeaufschlagung steuert.

Besonders bevorzugt berücksichtigt die Steuerungseinrichtung dabei auch die einzelnen Ventile (nicht gezeigt), welche die Kunststoffvorformlinge mit dem fließfähigen Medium und insbesondere der Druckluft beaufschlagen.

Das Bezugszeichen 5 kennzeichnet eine Erfassungseinrichtung, welche dazu geeignet und bestimmt ist, eine Position der Reckstange bzw. des stangenartigen Körpers (insbesondere in der Längsrichtung der Kunststoffvorformlinge zu erfassen. Bevorzugt ist diese Erfassungseinrichtung 5 auch dazu geeignet und bestimmt, eine Kraft zu erfassen, welche bei der Bewegung der stangenartigen Körper auf diese wirkt.

Bevorzugt wertet diese Erfassungseinrichtung 5 dabei Daten der Antriebseinrichtung 44 aus, um die Position oder Kraft zu bestimmen. So kann beispielsweise die Antriebseinrichtung Positionssensoren aufweisen oder es können auch etwa Strom- oder Spannungswerte, mit denen die Antriebseinrichtung betrieben wird, ermittelt werden.

Bevorzugt liegt die Anzahl dieser Umformungsstationen 24 zwischen 2 und 100, bevorzugt zwischen 4 und 60, bevorzugt zwischen 6 und 40.

Die Kunststoffvorformlinge 10 werden im Arbeitsbetrieb über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an ein erstes Druckluftreservoir 2a abgegeben, bei dem es sich hier um einen Ringkanal handelt.

Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. So ist bevorzugt je ein Druckreservoir zur Speicherung des Drucks P2 sowie der Zwischenblasdrücke Pi1 und Pi2 und des Drucks P1 vorhanden.

Das Bezugszeichen 33 kennzeichnet eine Verbindungsleitung, welche die Druckluft an eine Umformungsstation 24 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung 33 ist bevorzugt in dem drehenden Teil der Vorrichtung angeordnet.

Das Bezugszeichen 18 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 18 angeordnet. Bevorzugt ist der Reinraum 18 mit einer Dichtungseinrichtung, welche bevorzugt wenigstens zwei Wasserschlösser aufweist, gegenüber der unsterilen Umgebung abgedichtet. Bevorzugt ist dieser Reinraum ring- oder torusförmig ausgebildet

Die Vorrichtung weist bevorzugt eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 2a misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Diese Messeinrichtung ist insbesondere dazu geeignet und bestimmt, außerhalb eines Arbeitsbetriebs einen Druck über einen vorgegebenen Zeitraum zu bestimmen, so dass aus dieser Messung auf ein Schalten einzelner Ventile geschlossen werden kann.

Bevorzugt weisen auch die Ventileinrichtungen selbst jeweils wenigstens eine und bevorzugt mehrere Sensoreinrichtungen wie Druckmesseinrichtungen auf.

Das Bezugszeichen 19 kennzeichnet ebenfalls schematisch eine Durchflussmesseinrichtung, welche einen Durchfluss der Blasluft von einem Druckluftreservoir zu dem Ventilblock 90 einer Umformungsstation 24 bestimmt. Bevorzugt sind entsprechende Durchflussmesseinrichtungen jeweils zwischen einem Druckluftreservoir und allen Umformungsstationen angeordnet.

Auch zwischen den weiteren Druckluftreservoirs und den jeweiligen Umformungsstationen können weitere Durchflussmesseinrichtungen zugeordnet sein.

Weiterhin sind bevorzugt, wie oben erwähnt auch Positionserfassungseinrichtungen vorgesehen, welche Positionen der Reckstangen der einzelnen Umformungsstationen erfassen können.

Das Bezugszeichen 23 kennzeichnet eine Steuerungseinrichtung welche die Vorrichtung 1 steuert und insbesondere regelt. Diese Steuerungseinrichtung ist dabei bevorzugt auch in der Lage, Arbeitsparameter der Vorrichtung und insbesondere Einstellungen der Reckeinheit zu ändern.

In dieser Steuerungseinrichtung 23 können auch die Ventilschaltzeiten und oder die Ventilschaltzeitverzögerungen der einzelnen Ventile gespeichert sein. Bevorzugt können diese Ventilschaltzeiten und/oder Ventilschaltverzögerungen geändert werden und besonders bevorzugt auch automatisiert geändert werden.

Bevorzugt weist die Vorrichtung eine (nicht gezeigte) Prozessoreinrichtung auf, welche dazu geeignet und bestimmt ist, aus gemessenen Druckverläufen und Ventilschaltzeitpunkten Ventilschaltzeitverzögerungen zu bestimmen.

Bevorzugt ist die Steuerungseinrichtung dazu geeignet die Vorrichtung und insbesondere auch die Ventile unter Berücksichtigung der einzelnen Ventilschaltverzögerungen zu steuern und bevorzugt zu regeln.

So steuert die Steuerungseinrichtung insbesondere die einzelnen Ventileinrichtungen und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen d.h. der Blasdüsen. Wie erwähnt kann diese Steuerungseinrichtung bevorzugt auch die Einstellungen der einzelnen Drosseleinrichtungen einstellen.

Die Steuerungseinrichtung ist bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuern und insbesondere auch dazu, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert. Bevorzugt ist diese Speichereinrichtung 26 auch dazu geeignet und bestimmt, Positionen der einzelnen Reckstangen bzw. stangenartigen Körper zu speichern.

Bevorzugt ist die Speichereinrichtung 26 auch dazu geeignet, Referenzdaten zu speichern, insbesondere von aufgenommenen Druckverläufen und/oder von gemessenen Druckveränderungen und/oder von ermittelten Ventilschaltzeitverzögerungen.

Bevorzugt können diese Werte kontinuierlich und insbesondere über lange Zeiträume eines Maschinenbetriebs gespeichert werden. Die Steuerungseinrichtung steuert bzw. regelt bevorzugt auch unter Berücksichtigung dieser aufgenommenen Messwerte und insbesondere unter Berücksichtigung der aufgenommenen Druckwerte oder hieraus abgeleiteter Werte die Vorrichtung.

Bevorzugt ist weiterhin eine Anzeigeeinrichtung vorgesehen, welche zur Ausgabe von Informationen an einen Maschinenbediener dient. Mittels dieser Anzeigeeinrichtung können etwa gemessene Druck(verlaufs)kurven ausgegeben werden. Daneben können auch die aus diesen Druckverlaufskurven ermittelten Ventilschaltzeitverzögerungen wiedergegeben werden.

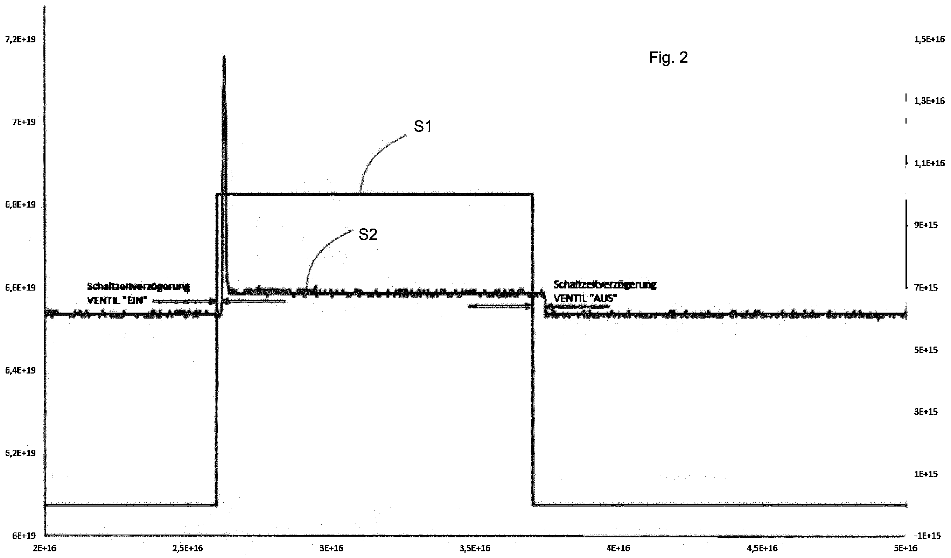

Fig. 2 zeigt eine Darstellung von aufgenommenen Druckkurven. Dabei bezieht sich das Bezugszeichen S1 auf eine Schaltkurve für ein bestimmtes Ventil. Auf der Ordinate ist dabei die Zeit aufgetragen und auf der Koordinate für die Kurve S1 beispielsweise ein Strom- oder Spannungsverlauf.

Das Bezugszeichen S2 kennzeichnet den mittels der Druckmesseinrichtung gemessenen Druckverlauf.

Man erkennt eine erhebliche Druckänderung kurz nach der an der Kurve S1 erkennbaren Schaltung eines Ventils (etwa von der geschlossenen Stellung in eine geöffnete Stellung, "Ventil ein").

Der zeitliche Abstand zwischen dem an der Kurve S1 erkennbaren Schaltzeitpunkt des Ventils und dem tatsächlichen Druckanstieg ergibt die Schaltzeitverzögerung des entsprechenden Ventils.

Zu einem späteren Zeitpunkt wird das Ventil wieder ausgeschaltet (Ventil "aus"). Auch hier tritt mit einer bestimmten zeitlichen Verzögerung wiederum eine Druckänderung auf. Hierbei handelt es sich um die Ventilschaltzeitverzögerung beim Ausschalten des Ventils und damit bevorzugt bei einem Schalten des Ventils von einer geöffneten Stellung in eine geschlossene Stellung.

Man erkennt, dass sich diese Schaltzeitverzögerungen voneinander unterscheiden, je nachdem ob das Ventil von einer geschlossenen Stellung in eine geöffnete Stellung oder umgekehrt geschaltet wird.

Es wird darauf hingewiesen, dass Merkmale, welche obenstehend für die Vorrichtung oder Anlage beschrieben wurden, entsprechend auch für das Verfahren Anwendung finden d.h. insbesondere im Rahmen des beschriebenen Verfahrens entsprechend angewandt werden oder angewandt werden können. Entsprechend sind auch Merkmale, welche obenstehend für das Verfahren beschrieben wurden entsprechend vorrichtungsseitig offenbart, d.h. die beschriebene Vorrichtung ist auch entsprechend und derart mit solchen Merkmalen oder Eigenschaften ausgestaltet, dass das Verfahren (auch in den jeweils angegebenen bevorzugten Varianten) durchgeführt werden kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Betreiben einer Umformungseinrichtung zum Umformen von Kunststoffvorformlingen zu Kunststoffbehältnissen, wobei die Umformungseinrichtung (1) einen bewegbaren Träger (22) aufweist, an welchem eine Vielzahl von Umformungsstationen (24) angeordnet ist, wobei jede dieser Umformungsstationen in einem Arbeitsbetrieb Kunststoffvorformlinge (10) durch Beaufschlagung mit einem fließförmigen und insbesondere gasförmigen Medium zu den Kunststoffbehältnissen (15) umformt, wobei in dem Arbeitsbetrieb die Kunststoffvorformlinge (10) zu ihrer Expansion mit wenigstens zwei unterschiedlichen Druckniveaus beaufschlagt werden und zu dieser Beaufschlagung wenigstens zwei Ventile verwendet werden,
**dadurch gekennzeichnet, dass**
wenigstens zeitweise wenigstens ein Messwert bestimmt wird, der für eine Schaltzeit und/oder eine Schaltzeitverzögerung wenigstens eines der Ventile charakteristisch ist, wobei dieser Messwert sich aus einem Druckmesswert ergibt.

2. Verfahren nach Anspruch 1,
**dadurch gekennzeichnet, dass**
der Druckmesswert ein für eine wesentliche Änderung eines von einem Drucksensor erfassten Druckes charakteristischer Druckmesswert ist.

3. Verfahren nach dem vorangegangenen Anspruch,
**dadurch gekennzeichnet, dass**
eine Schaltzeitverzögerung bestimmt wird, welche zwischen einem insbesondere elektrischen Schalten eines Ventils und Auftreten des Druckmesswerts aufgetreten ist wobei bevorzugt diese Schaltzeitverzögerung der Messwert ist.

4. Verfahren nach Anspruch 1,
**dadurch gekennzeichnet, dass**
dieser Messwert oder ein aus diesem Messwert abgeleiteter Wert in dem Arbeitsbetrieb berücksichtigt wird, wobei es sich bei diesem abgeleiteten Wert insbesondere um einen Zeitpunkt und insbesondere um eine Ventilschaltzeit handelt.

5. Verfahren nach wenigstens einem der vorangegangenen Ansprüche,
**dadurch gekennzeichnet, dass**
der Messwert außerhalb des Arbeitsbetriebs und bevorzugt während eines Kalibrierbetriebs gemessen wird.

6. Verfahren nach wenigstens einem der vorangegangenen Ansprüche,
**dadurch gekennzeichnet, dass**
der Messwert für mehrere Umformungsstationen (24) und bevorzugt für alle Umformungsstationen bestimmt wird und/oder der Messwert für mehrere Ventile und bevorzugt für alle Ventile einer Umformungsstation bestimmt wird.

7. Verfahren nach wenigstens einem der vorangegangenen Ansprüche,
**dadurch gekennzeichnet, dass**
zur Bestimmung des wenigstens einen Messwerts einer Umformungsstation (24) ein nicht erwärmter Kunststoffvorformling zugeführt wird.

8. Verfahren nach wenigstens einem der vorangegangenen Ansprüche,
**dadurch gekennzeichnet, dass**
der Zeitpunkt eines Signalwechsels eines Ventils bestimmt wird und/oder der Zeitpunkt einer Druckänderung bestimmt wird und bevorzugt diese Zeitpunkte miteinander verglichen werden, insbesondere um aus diesem Vergleich eine Schaltzeitverzögerung zu bestimmen.

9. Verfahren nach dem vorangegangenen Anspruch,
**dadurch gekennzeichnet, dass**
der Zeitpunkt eines Signalwechsels eines Ventils und/oder der Zeitpunkt einer Druckänderung sowohl für einen Einschaltvorgang des Ventils als auch für einen Ausschaltvorgang des Ventils bestimmt wird und bevorzugt diese Zeitpunkte miteinander verglichen werden, insbesondere um aus diesen Vergleichen eine Schaltzeitverzögerung sowohl für den Einschaltvorgang des Ventils als auch für den Ausschaltvorgang des Ventils zu bestimmen.

10. Verfahren nach wenigstens einem der vorangegangenen Ansprüche,
**dadurch gekennzeichnet, dass**
in dem Arbeitsbetrieb der Kunststoffvorformling (10) mit wenigstens drei und bevorzugt wenigstens vier unterschiedlichen Druckniveaus beaufschlagt werden und zu dieser Beaufschlagung wenigstens drei und bevorzugt wenigstens vier Ventile verwendet werden.

11. Verfahren nach wenigstens einem der vorangegangenen Ansprüche,
**dadurch gekennzeichnet, dass** in dem Arbeitsbetrieb wenigstens zeitweise das fließfähige Medium aus den expandierten Behältnissen mittels eines Auslassventils entlassen wird und bevorzugt auch für dieses Auslassventil wenigstens ein Messwert bestimmt wird, der für eine Schaltzeitverzögerung dieses Auslassventils charakteristisch ist.

12. Verfahren nach wenigstens einem der vorangegangenen Ansprüche,
**dadurch gekennzeichnet, dass**
aus dem für die Schaltzeitverzögerung charakteristischen Wert auf ein Verschleißverhalten wenigstens eines Ventils geschlossen wird.

13. Umformungseinrichtung zum Umformen von Kunststoffvorformlingen zu Kunststoffbehältnissen, wobei die Umformungseinrichtung (1) einen bewegbaren Träger (20) aufweist, an welchem eine Vielzahl von Umformungsstationen (2) angeordnet ist, wobei jede dieser Umformungsstationen dazu geeignet und bestimmt ist, Kunststoffvorformlinge (10) durch Beaufschlagung mit einem fließförmigen und insbesondere gasförmigen Medium zu den Kunststoffbehältnissen umzuformen, wobei in einem Arbeitsbetrieb jede Umformungsstation dazu geeignet und bestimmt ist die Kunststoffvorformlinge zu ihrer Expansion mit wenigstens zwei unterschiedlichen Druckniveaus zu beaufschlagen und zu dieser Beaufschlagung jede Umformungsstation wenigstens zwei Ventile aufweist,
**dadurch gekennzeichnet, dass**
wenigstens eine Prozessoreinrichtung vorgesehen ist, welche dazu geeignet und bestimmt ist wenigstens zeitweise wenigstens einen Messwert zu bestimmen, der für eine Schaltzeit und/oder eine Schaltzeitverzögerung wenigstens eines Ventils charakteristisch ist, wobei sich dieser Messwert aus einem Druckmesswert ergibt, der von einer Druckmesseinrichtung bestimmbar ist.

14. Umformungseinrichtung nach dem vorangegangenen Anspruch,
**dadurch gekennzeichnet, dass**
der Druckmesswert ein für eine wesentliche Änderung eines von der Druckmesseinrichtung erfassten Druckes charakteristischer Druckmesswert ist.

15. Umformungseinrichtung nach dem vorangegangenen Anspruch,
**dadurch gekennzeichnet, dass**
eine Schaltzeitverzögerung bestimmbar ist, welche zwischen einem - insbesondere elektrischen - Schalten des Ventils und dem Auftreten des Druckmesswerts aufgetreten ist wobei bevorzugt diese Schaltzeitverzögerung der Messwert ist.
